# EUROPEAN PATENT APPLICATION

(11) **EP 1 837 551 A2**
(43) Date of publication of application: **26.09.2007**
(21) Application number: 07104448.1
(22) Date of filing: 20.03.2007
(51) Int. Cl.: F16G 3/00

(54) **Closed-ring transmission belt and method to produce same**

(30) Priority: 21.03.2006 IT UD20060072
(71) Applicant: ELATECH SRL, I-24012 Brembilla BG (IT)
(72) Inventor: Scaglia, Riccardo, 20123 Milano (IT)
(74) Representative: Petraz, Gilberto Luigi

(57) **Abstract**

Closed-ring transmission belt (10) comprising a base body (12), having an internal part (15), to contact mechanical transmission members, and an external part (16), wherein the base body (12) has a toothed join zone (20), defined by protruding elements (21) associated with corresponding hollows (22). The transmission belt (10) also comprises reinforcement elements (25) disposed in correspondence with the join zone (20) and at least partly drowned in the external part (16) so as to at least partly cover the protruding elements (21).

## Description

### FIELD OF THE INVENTION

The present invention concerns a closed-ring transmission belt, toothed or flat, and the method to produce it. The belt according to the invention can be used for example in heavy transport applications and the transmission of power between mechanical members and is advantageously but not exclusively of the type reinforced inside by means of a plurality of inextensible wires or cords.

### BACKGROUND OF THE INVENTION

Closed-ring transmission belts are known, which comprise a base body made of elastomer material, for example polyurethane, normally reinforced by means of a plurality of inextensible wires, for example of steel or aramid, parallel to each other.

The wires are drowned inside the material between an internal part of the belt body, subject to compression and able to contact the mechanical movement members, and an external part, subject to tensioning.

It is known to make said belts in an economically advantageous manner, starting from a shaped strip which is cut to size to define a segment equal to the development of the belt.

At the ends of the segment a plurality of longitudinal hollows are made, which define corresponding protruding elements, or fringes, for example having a tongue or tooth shape

The segment is then bent back in a ring, so that the protruding elements of one end are inserted into the hollows of the other end and are joined to the latter by means of heat sealing, so as to obtain a closed-ring belt.

The belt thus made is economically advantageous compared with a belt produced with an endless cable, since it can be produced in any development desired with the pitch tolerance, if toothed. However, it has the disadvantage that it has little resistance to traction, particularly in correspondence with the join zone, compared with belts produced with an endless cable, and is therefore able to support only relatively low static and dynamic loads.

One purpose of the present invention is to produce a closed-ring transmission belt, toothed or flat, which has a relatively high resistance to traction even in correspondence with the join zone and which is able to support greater static and dynamic loads than known belts produced by heat sealing, thus combining the advantages typical of known belts (economy, versatile development) with those of the more costly belts produced with an endless cable.

Another purpose is to perfect a method that allows to produce in a simple and economic manner a closed-ring transmission belt which has good mechanical characteristics and high resistance to traction.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a belt according to the present invention is of the closed-ring type and can be used for heavy transport applications, or for applications of mechanical power transmission.

Advantageously, the belt is of the type reinforced inside by a plurality of substantially inextensible wires.

The belt according to the invention comprises a base body, made of elastomer material, having an internal part able to contact mechanical transmission members, and an external part, for example substantially flat. The two parts are separated from each other by said inextensible wires.

The base body has at least a toothed join zone, defined by protruding elements or fringes, shaped for example like a tooth, a tongue, or similar, and by corresponding hollows which are associated with the protruding elements, for example, by means of heat sealing, or in another known manner.

According to a characteristic of the present invention, the belt also comprises reinforcement means disposed in correspondence with the join zone and at least partly drowned in the external part that at least partly covers the protruding elements.

The reinforcement means therefore guarantees to the belt according to the invention a greater resistance to traction, allowing it to be used even with greater static and dynamic loads than known belts.

According to one form of embodiment of the invention, the reinforcement means comprises at least a reinforcement mesh provided with a plurality of wires substantially inextensible and woven together.

The belt can be made following a method according to the present invention which comprises at least a step in which the reinforcement means is disposed in correspondence with the join zone so as to be partly drowned in the external part of the base body by means of a heat treatment and possibly under pressure, for example by means of heat sealing, or in another known manner.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a plane view, partly in section, of a part of a transmission belt according to the present invention;
- fig. 2 is a section from II to II of fig. 1;
- fig. 3 is a plane view, partly in section, of a variant of the transmission belt in fig. 1.

### DETAILED DESCRIPTION OF A PREFERENTIAL FORM OF EMBODIMENT

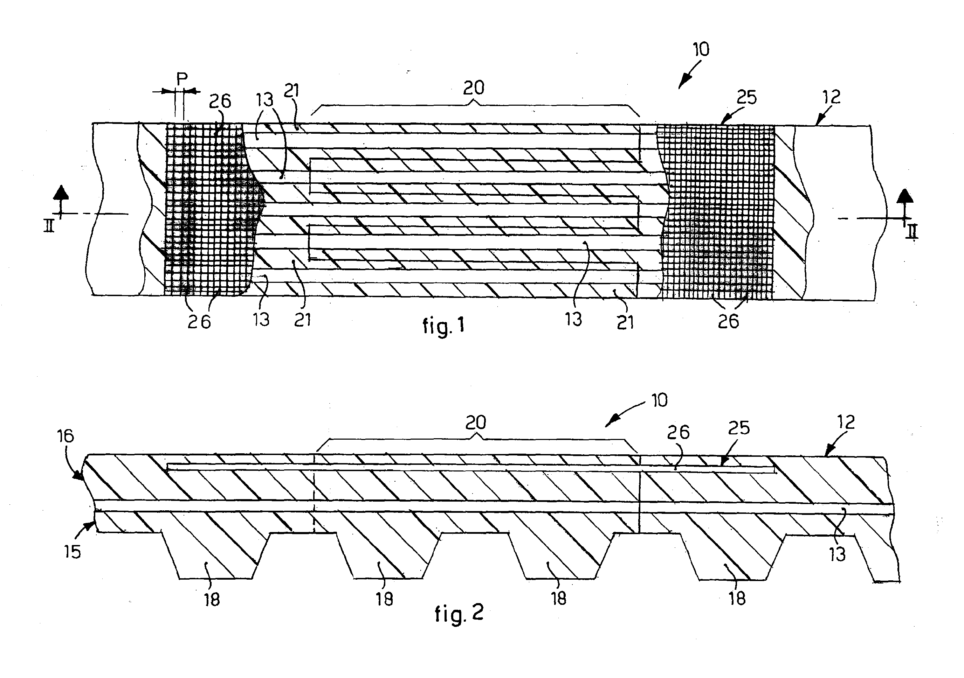

With reference to fig. 1, a belt 10 according to the present invention is of the closed-ring type and can be used for the mechanical transmission of power.

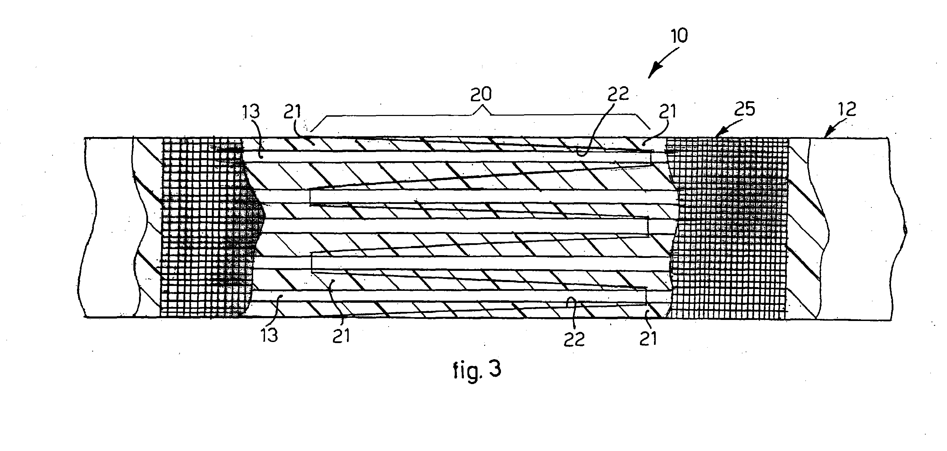

The belt 10 (figs. 1 and 2) comprises a base body 12 made of elastomer material, for example polyurethane, reinforced by a plurality of inextensible wires 13, substantially parallel with respect to each other.

The inextensible wires 13 are made, for example, of metal and are drowned inside the elastomer material between an internal part 15 of the base body 12, subject to compression and able to contact the mechanical movement members, and an external part 16, subject to tensioning.

The internal part 15 is also provided with a plurality of teeth having shape, size and pitch compatible with those of the corresponding seatings made in the mechanical movement members on which the belt 10 is used.

The base body 12 has at least a join zone 20 of the toothed type, defined by a plurality of protruding elements 21, or fringes, with a rectangular shape, and by corresponding hollows 22.

In the case shown here, each protruding element 21 is associated with an inextensible wire 13, but it is provided to associate each protruding element 21 with two or more inextensible wires 13.

According to the variant shown in fig. 3, the protruding elements 21 are shaped like a tooth, but it is in any case provided to make the protruding elements 21 in other shapes, for example like a tongue.

To give an example, the length of the join zone 20 is normally comprised between about 50 mm and about 250 mm according to the type of belt to be made, while the whole belt 10 can be from about 400 mm to several meters long.

The belt 10 (figs. 1 and 2) also comprises a reinforcement mesh 25, made with a plurality of wires 26, which can be both individual or woven together, like strands, so as to form cords, which optimize the characteristics of longitudinal and transverse stretching. The wires 26 are preferably made of steel, aramid, polyester, carbon fiber, glass fiber or synthetic fibers, advantageously with high mechanical resistance, for example nylon, metal, or other material having similar properties of mechanical resistance, and are disposed so as to define a mesh having a pitch P (fig. 1) comprised for example between about 0.5 mm and about 10 mm.

According to a variant not shown here, the wires or cords are woven together in at least two directions, respectively first and second, for example substantially orthogonal with respect to each other. First wires, disposed in the first direction, have a determinate pitch, which can be different from the pitch of the second wires disposed in the second direction. The reinforcement mesh 25 thus has a different pitch in the two directions.

The reinforcement mesh 25 is disposed in correspondence with the join zone 20 and is completely drowned in the external part 16 of the base body 12.

The reinforcement mesh 25 has a width substantially equal to, or less than, the transverse width of the base body 12, and a length equal to or more than the length of the protruding elements 21.

Advantageously, the length of the reinforcement mesh 25 is about from 10% to about 100% more than the length of the protruding elements 21.

The belt 10 is made following a method according to the invention, which comprises the following steps.

A first step provides to cut to size a shaped strip to define a segment equal to the development of the belt 10.

In a second step, in each of the two ends of the segment a plurality of longitudinal hollows 22 are made, which define the corresponding protruding elements 21.

The hollows 22 are made in such a manner that all the inextensible wires 13 are associated with corresponding protruding elements 21.

According to one embodiment of the invention, the first and the second step can also be performed simultaneously, for example with suitable machines.

In a third step, the segment is bent so as to define a ring and the protruding elements 21 of one end are inserted into the hollows 22 of the other end, inside a suitably prepared mold.

In a fourth step, the reinforcement mesh 25, previously cut to suitable size, is disposed on the external part 16 and in correspondence with the join zone 20, so as to cover the protruding elements 21.

In a fifth step, the belt 10, in particular the join zone 20, is closed in a mold and heat sealed, so that the reinforcement mesh 25 is drowned in the elastomer material of the base body 12 in order to define therewith a single body, so as to obtain the closed-ring belt 10 according to the invention.

Thanks to the reinforcement mesh 25, the belt 10 according to the invention thus made has a considerably greater resistance to traction (more than 15% more on a static level and up to 35% more on a dynamic level) compared with known belts produced with heat sealing methods, in particular in the join zone 20.

It is clear that modifications and/or additions of parts and/or steps may be made to the belt 10 and the method as described heretofore, without departing from the field and scope of the present invention.

It is also clear that, although the present invention has been described with reference to some specific examples, a person of skill in the art shall certainly be able to achieve many other equivalent forms of closed-ring transmission belt and method to produce it, having the characteristics as set forth in the claims and hence all coming within the field of protection defined thereby.

## Claims

1. Closed-ring transmission belt comprising a base body (12), having an internal part (15), able to contact mechanical transmission members, and an external part (16), wherein said base body (12) has at least a toothed join zone (20), defined by protruding elements (21) associated with corresponding hollows (22), **characterized in that** it also comprises reinforcement means (25) disposed in correspondence with said join zone (20) and at least partly drowned in said external part (16) so as to at least partly cover said protruding elements (21).

2. Transmission belt as in claim 1, **characterized in that** said reinforcement means comprises at least a reinforcement mesh (25) consisting of a plurality of wires (26).

3. Transmission belt as in claim 2, **characterized in that** said wires (26) are interwoven with each other so as to form cords.

4. Transmission belt as in claim 3, **characterized in that** said wires (26) or cords are made of mechanically resistant material.

5. Transmission belt as in claim 3 or 4, **characterized in that** said wires (26) or cords comprise at least one of the following materials: aramid, polyester, carbon fiber, nylon, glass fiber, synthetic fibers with high mechanical resistance, metal, such as steel.

6. Transmission belt as in claim 3, 4 or 5, **characterized in that** said wires (26) or cords are interwoven with each other so as to define a mesh having a determinate pitch (P).

7. Transmission belt as in claim 3, 4 or 5, **characterized in that** said wires (26) or cords are interwoven with each other in at least two directions, respectively first and second, wherein first wires or cords disposed in said first direction have a determinate pitch, substantially different from the pitch of the second wires or cords disposed in said second direction.

8. Transmission belt as in claim 6, **characterized in that** said pitch (P) is comprised between about 0.5 mm and about 10 mm.

9. Transmission belt as in any claim hereinbefore, **characterized in that** said reinforcement means (25) is drowned in said external part (16) by means of heat sealing so as to define with the latter a single body.

10. Transmission belt as in claim 2, **characterized in that** said reinforcement mesh (25) has a width substantially equal to, or less than, the transverse width of said base body (12).

11. Transmission belt as in claim 2 or 9, **characterized in that** said reinforcement mesh (25) has a length substantially equal to or greater than the length of said protruding elements (21).

12. Method to make a closed-ring transmission belt comprising a base body (12), having an internal part (15), able to contact mechanical transmission members, and an external part (16), wherein said base body (12) has at least a toothed join zone (20), defined by protruding elements (21) associated with corresponding hollows (22), **characterized in that** it comprises at least a step in which a reinforcement means (25) is disposed in correspondence with said join zone (20) and at least partly drowned in said external part (16) so as to at least partly cover said protruding elements (21).

13. Method as in claim 11, **characterized in that** during said step, said reinforcement means (25) is drowned in said external part (16) by means of at least a heat treatment.
